(19) **Europäisches Patentamt**
**European Patent Office**
**Office européen des brevets**

(11) **EP 3 346 431 A1**

(12) **EUROPEAN PATENT APPLICATION**

(43) Date of publication:
**11.07.2018 Bulletin 2018/28**

(51) Int Cl.:
***G06Q 10/04*** *(2012.01)*

(21) Application number: **18150106.5**

(22) Date of filing: **02.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **04.01.2017 US 201715397989**

(71) Applicant: **Honeywell International Inc.**
**Morris Plains, NJ 07950 (US)**

(72) Inventors:
• **KUMAR, Naveen**
**Morris Plains, NJ New Jersey 07950 (US)**
• **FROLIK, Petr**
**Morris Plains, NJ New Jersey 07950 (US)**
• **JOSHI, Gunjan**
**Morris Plains, NJ New Jersey 07950 (US)**
• **RAMADUGU, Haritha**
**Morris Plains, NJ New Jersey 07950 (US)**

(74) Representative: **Houghton, Mark Phillip**
**Patent Outsourcing Limited**
**1 King Street**
**Bakewell, Derbyshire DE45 1DZ (GB)**

(54) **METHODS AND APPARATUS FOR PROVIDING FUEL TANKERING DATA ONBOARD AN AIRCRAFT**

(57) A method for providing fuel tankering data onboard an aircraft is provided. The method obtains a flight plan for a trip associated with the aircraft; determines one or more combinations of fuel-filling options for the trip, by at least one processor onboard the aircraft; computes, by the at least one processor, fuel tankering recommendations for each of the one or more combinations; and presents the fuel tankering recommendations via a display device onboard the aircraft.

FIG. 1

**Description**

TECHNICAL FIELD

Embodiments of the subject matter described herein relate generally to generating fuel tankering data. More particularly, embodiments of the subject matter relate to dynamically computing and presenting, onboard an aircraft, fuel tankering data for a particular flight plan.

BACKGROUND

Cost considerations significantly affect decisions in the aviation industry. Airlines, commercial carriers, and private jets attempt to save money wherever possible. A significant portion of aircraft operating costs is allocated to the purchase of fuel. In the current era of high fuel costs, saving money is a challenge, and may be accomplished in two ways: (i) reducing the amount of fuel consumed, and/or (ii) paying a lower price for fuel. Fuel Tankering is a practice used in aviation industry for cost avoidance in purchasing fuel for long trips having multiple stopovers. Fuel tankering may be defined as purchasing fuel in excess for upcoming and subsequent flight legs (e.g., topping off the tanks at cheaper stations and paying less for each gallon of fuel burned).

Flight crew members or operations professionals decide whether to tanker fuel based on manually performed calculations which consider fuel prices at various locations along a flight route. However, these calculations do not consider other factors affecting whether tankering fuel at particular locations is cost-effective.

Accordingly, it is desirable to provide fuel tankering data that considers factors other than cost. Furthermore, other desirable features and characteristics will become apparent from the subsequent detailed description and the appended claims, taken in conjunction with the accompanying drawings and the foregoing technical field and background.

BRIEF SUMMARY

Some embodiments of the present disclosure provide a method for providing fuel tankering data onboard an aircraft. The method obtains a flight plan for a trip associated with the aircraft; determines one or more combinations of fuel-filling options for the trip, by at least one processor onboard the aircraft; computes, by the at least one processor, fuel tankering recommendations for each of the one or more combinations; and presents the fuel tankering recommendations via a display device onboard the aircraft.

Some embodiments disclose a system for providing fuel tankering data onboard an aircraft. The system includes: a system memory element; a display device, configured to present fuel tankering recommendations; and at least one processor, communicatively coupled to the system memory element, and the display device, the at least one processor configured to: obtain a flight plan for a trip associated with the aircraft; determine one or more combinations of fuel-filling options for the trip; compute fuel tankering recommendations for each of the one or more combinations; and present the fuel tankering recommendations via the display device onboard the aircraft.

Some embodiments provide a non-transitory, computer-readable medium containing instructions thereon, which, when executed by a processor, perform a method. The method receives parameter data for an aircraft, the parameter data comprising a flight plan for a trip, aircraft profile data, fuel prices data, fuel taxes data, fuel uplift fees data, airport facility fees and waive offs data, runway analysis data, and weather data associated with the flight plan and the trip; determines one or more combinations of the trip, by at least one processor onboard the aircraft; computes, by the at least one processor, fuel tankering recommendations for each of the one or more combinations; and presents the fuel tankering recommendations via a display device onboard the aircraft.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a diagram of a fuel tankering recommendation system, in accordance with the disclosed embodiments;

FIG. 2 is a functional block diagram of a computing device, in accordance with the disclosed embodiments;

FIG. 3 is a flow chart that illustrates an embodiment of a process for providing fuel tankering data onboard an aircraft; and

FIG. 4 is a flow chart that illustrates an embodiment of a process for computing fuel tankering recommendations.

DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter presented herein relates to apparatus and methods for providing fuel tankering data onboard an aircraft, in real-time. More specifically, the subject matter relates to using a computing device onboard an aircraft to perform calculations to determine appropriate fuel tankering recommendations, and to present the appropriate fuel tankering recommendations via a display device onboard the aircraft. The fuel tankering recommendations may be dynamically calculated and presented, to inform flight crew members of changing conditions to inform fueling decisions throughout the flight plan or route. In certain embodiments, the fuel tankering recommendations are calculated and presented using an Electronic Flight Bag (EFB) application executed by the computing device.

Certain terminologies are used with regard to the various embodiments of the present disclosure. A fuel tankering recommendation is a recommended amount of fuel uplift to be made at each stopover to attain optimal fuel costs for a trip composed of multiple legs. A flight plan includes details associated with an intended flight, and is usually filed with an aviation authority (e.g., Federal Aviation Administration). An intended flight may also be referred to as a "trip", and extends from a departure airport at the beginning point of the trip to a destination airport at the endpoint of the trip. The trip is composed of one or more "legs", wherein each leg is a subset of the trip and extends between stopover airports. Stopover airports include the departure airport, the destination airport, and any airports at which the aircraft makes a temporary stop during the trip and on the way to the destination airport (e.g., during a layover).

A combination of a trip includes each of the stopover airports and potential amounts of fuel that may be acquired at each stopover airport, based on fuel price ranges. Each combination may be associated with a plurality of permutations, wherein each permutation is an arrangement of the amount of fuel to fill at each stopover airport of the combination, based on fuel price ranges. A fit permutation is a permutation that accommodates the amount of fuel needed for all legs in a trip, regardless of where the fuel is acquired (i.e., where the aircraft is fueled). A fit permutation is calculated using fuel prices (based on fuel price ranges available at stopover airports), cost of carry, and facility fees. Fuel providers publish fuel prices in ranges. As one example, F1 to F2 fuel units may cost P1 price units, whereas (F2+1) to F3 fuel units may cost P2 price units. The cost of carry is a percentage of fuel burnt to carry the extra fuel for an hour of flight with the given weather, flight, and temperature conditions. The dynamic maximum fuel capacity is the maximum fuel the aircraft can carry for a leg with given flight, temperature, and weather conditions.

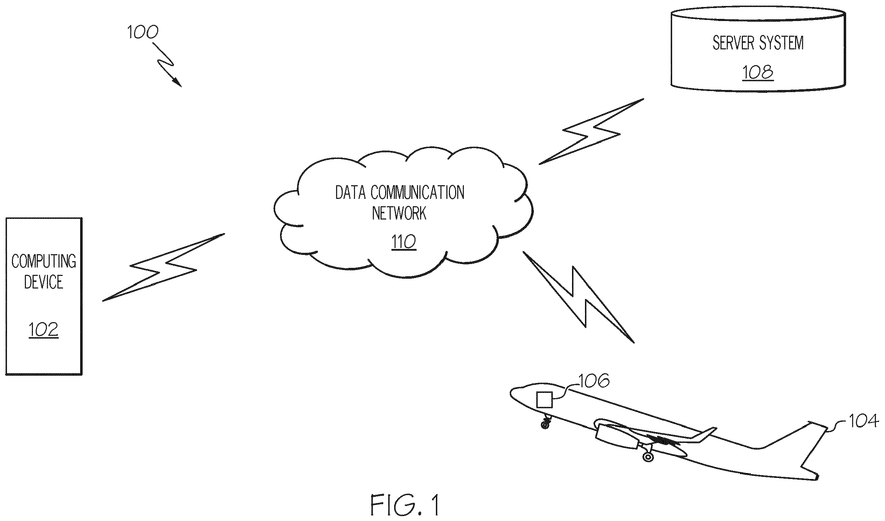

Turning now to the figures, FIG. 1 is a diagram of a fuel tankering recommendation system 100, in accordance with the disclosed embodiments. The fuel tankering recommendation system 100 operates to compute and present dynamic, real-time, fuel-tankering recommendations onboard an aircraft 104 during flight. The fuel tankering recommendation system 100 may include, without limitation, a computing device 102 that communicates with one or more avionics systems 106 onboard the aircraft 104 and at least one server system 108, via a data communication network 110. In practice, certain embodiments of the fuel tankering recommendation system 100 may include additional or alternative elements and components, as desired for the particular application.

The computing device 102 may be implemented by any computing device that includes at least one processor, some form of memory hardware, a user interface, and communication hardware. For example, the computing device 102 may be implemented using a personal computing device, such as a tablet computer, a laptop computer, a personal digital assistant (PDA), a smartphone, or the like. In this scenario, the computing device 102 is capable of storing, maintaining, and executing an Electronic Flight Bag (EFB) application configured to determine and present fuel tankering recommendations. In other embodiments, the computing device 102 may be implemented using a computer system onboard the aircraft 104, which is configured to determine and present fuel tankering recommendations.

The aircraft 104 may be any aviation vehicle for which fuel tankering recommendations are relevant and applicable during completion of a flight route. The aircraft 104 may be implemented as an airplane, helicopter, spacecraft, hovercraft, or the like. The one or more avionics systems 106 may include a Flight Management System (FMS), Automatic Dependent Surveillance - Broadcast (ADS-B) devices, navigation devices, weather radar, brake systems, or the like. Data obtained from the one or more avionics systems 106 may include, without limitation: flight data, weather data, brake system data, weight and balance data, runway analysis data, aircraft performance data, or the like.

The server system 108 may include any number of application servers, and each server may be implemented using any suitable computer. In some embodiments, the server system 108 includes one or more dedicated computers. In some embodiments, the server system 108 includes one or more computers carrying out other functionality in addition to server operations. The server system 108 may store and provide any type of data used to calculate fuel tankering recommendations. Such data may include, without limitation: flight plan data, runway analysis data, aircraft weight and balance data, aircraft wear and tear data, fuel prices at airports, airport facility fees, fuel card information, and other data compatible with the computing device 200.

The computing device 102 is usually located onboard the aircraft 104, and the computing device 102 communicates with the one or more avionics systems 106 via wired and/or wireless communication connection. The computing device 102 and the server system 108 are generally disparately located, and the computing device 102 communicates with the server system 108 via the data communication network 110 and/or via communication mechanisms onboard the aircraft 104.

The data communication network 110 may be any digital or other communications network capable of transmitting messages or data between devices, systems, or components. In certain embodiments, the data communication network 110 includes a packet switched network that facilitates packet-based data communication, addressing, and data routing. The packet switched network could be, for example, a wide area network, the Internet, or the like. In various embodiments, the data communication network 110 includes any number of public or private data connections, links or network connections supporting any number of communications protocols. The data communication network 110 may include the Internet, for example, or any other network based upon TCP/IP or other conventional protocols. In various embodiments, the data communication network 110 could also incorporate a wireless and/or wired telephone network, such as a cellular communications network for communicating with mobile phones, personal digital assistants, and/or the like. The data communication network 110 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

During typical operation, the computing device 102 obtains relevant data associated with fuel tankering and fuel consumption of the aircraft 104 from the one or more avionics systems 106 and the remote server system 108. The computing device 102 then uses the relevant data to compute fuel tankering recommendations for a current flight route of the aircraft 104, and presents the computed fuel tankering recommendations such that a user (e.g., a flight crew member) may make fuel tankering decisions based on the presented recommendations. The computing device 102 is further configured to continuously and dynamically calculate and present updated fuel tankering recommendations during flight. Such dynamic, real-time calculation of fuel tankering recommendations considers updated, real-time data which may alter previously-calculated recommendations (e.g., recommendations calculated prior to the flight).

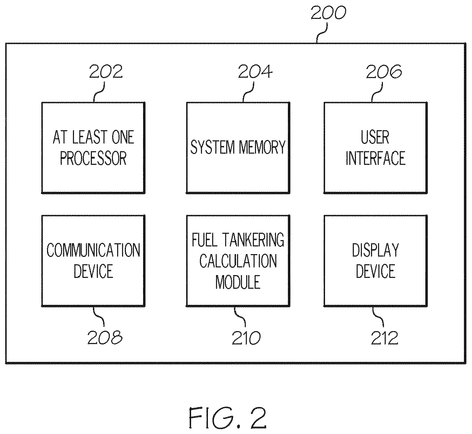

FIG. 2 is a functional block diagram of a computing device 200, in accordance with the disclosed embodiments. It should be noted that the computing device 200 can be implemented with the computing device 102 depicted in FIG. 1. In this regard, the computing device 200 shows certain elements and components of the computing device 200 in more detail.

The computing device 200 generally includes, without limitation: at least one processor 202; system memory 204; a user interface 206; a communication device 208; a fuel tankering calculation module 210; and a display device 212. These elements and features of the computing device 200 may be operatively associated with one another, coupled to one another, or otherwise configured to cooperate with one another as needed to support the desired functionality - in particular, dynamically providing fuel tankering recommendations onboard an aircraft during flight, as described herein. For ease of illustration and clarity, the various physical, electrical, and logical couplings and interconnections for these elements and features are not depicted in FIG. 1. Moreover, it should be appreciated that embodiments of the computing device 200 will include other elements, modules, and features that cooperate to support the desired functionality. For simplicity, FIG. 2 only depicts certain elements that relate to the fuel tankering recommendation-generating techniques described in more detail below.

The at least one processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 202 may be realized as one or more microprocessors, controllers, microcontrollers, or state machines. Moreover, the at least one processor 202 may be implemented as a combination of computing devices, e.g., a combination of digital signal processors and microprocessors, a plurality of microprocessors, one or more microprocessors in conjunction with a digital signal processor core, or any other such configuration.

The at least one processor 202 is communicatively coupled to the system memory 204. The system memory 204 is configured to store any obtained or generated data associated with fuel tankering recommendations, and graphical elements associated with the fuel tankering recommendation system. The system memory 204 may be realized using any number of devices, components, or modules, as appropriate to the embodiment. Moreover, the computing device 200 could include system memory 204 integrated therein and/or a system memory 204 operatively coupled thereto, as appropriate to the particular embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the computing device 200. The system memory 204 can be coupled to the at least one processor 202 such that the at least one processor 202 can read information from, and write information to, the system memory 204. In the alternative, the system memory 204 may be integral to the at least one processor 202. As an example, the at least one processor 202 and the system memory 204 may reside in a suitably designed application-specific integrated circuit (ASIC).

The user interface 206 may include or cooperate with various features to allow a user to interact with the computing device 200. Accordingly, the user interface 206 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the computing device 200. For example, the user interface 206 could be manipulated by an operator to provide user input fuel tankering data for a particular airport, user requests for fuel tankering recommendations and/or dynamically updated fuel tankering recommendations during flight, as described herein.

In certain embodiments, the user interface 206 may include or cooperate with various features to allow a user to interact with the computing device 200 via graphical elements rendered on a display element (e.g., the display device 212). Accordingly, the user interface 206 may initiate the creation, maintenance, and presentation of a graphical user interface (GUI). In certain embodiments, the display device 212 implements touch-sensitive technology for purposes of interacting with the GUI. Thus, a user can manipulate the GUI by moving a cursor symbol rendered on the display device 212, or by physically interacting with the display device 212 itself for recognition and interpretation, via the user interface 206.

The communication device 208 is suitably configured to communicate data between the computing device 200 and one or more remote servers and one or more avionics systems onboard an aircraft. The communication device 208 may transmit and receive communications over a wireless local area network (WLAN), the Internet, a satellite uplink/downlink, a cellular network, a broadband network, a wide area network, or the like. As described in more detail below, data received by the communication device 208 may include, without limitation: flight plan data, runway analysis data, aircraft weight and balance data, aircraft wear and tear data, fuel prices at airports, airport facility fees, fuel card information, aircraft performance data, facility fees and waive-offs data, weather data, and other data compatible with the computing device 200. Data provided by the communication device 208 may include, without limitation, fuel re-used from previous legs of a flight plan, fuel to be filled and fuel onboard at each airport, fuel cost before tankering, fuel cost after tankering, tankering savings data, and the like.

The fuel tankering calculation module 210 is suitably configured to use input data parameters obtained by the communication device 208 to compute appropriate amounts of fuel to purchase and load onto the aircraft at airports along a particular flight route or flight plan. Fuel tankering is purchasing and loading fuel in excess at an airport, to accommodate subsequent "legs" or portions of the flight route, based on cost considerations. The fuel tankering calculation module 210 presents the calculated amounts of fuel, onboard the aircraft, as fuel tankering recommendations. In practice, the fuel tankering calculation module 210 may be implemented with (or cooperate with) the at least one processor 202 to perform at least some of the functions and operations described in more detail herein. In this regard, the fuel tankering calculation module 210 may be realized as suitably written processing logic, application program code, or the like.

The display device 212 is configured to display various icons, text, and/or graphical elements associated with fuel tankering recommendations, including flight plan details, take-off and landing weight limitations, trip details, carbon emissions fees, customer fuel card data, fuel prices, fuel fees, fuel tax data, aircraft wear and tear data, aircraft profile and performance data, fuel onboard data, fuel uplift data, extra emissions data, waive-offs, cost of carry factors, or the like. In an exemplary embodiment, the display device 212 is communicatively coupled to the user interface 206, and the user interface 206 is communicatively coupled to the at least one processor 202. The at least one processor 202, the user interface 206, and the display device 212 are cooperatively configured to display, render, or otherwise convey one or more graphical representations or images associated with fuel tankering recommendations on the display device 212, as described in greater detail below. In an exemplary embodiment, the display device 212 is realized as an electronic display configured to graphically display fuel tankering recommendation data, as described herein. In some embodiments, the computing device 200 is an integrated computer system onboard an aircraft, and the display device 212 is located within a cockpit of the aircraft, and is thus implemented as an aircraft display. In other embodiments, the display device 212 is implemented as a display screen of a standalone, personal computing device (e.g., laptop computer, tablet computer). It will be appreciated that although the display device 212 may be implemented using a single display, certain embodiments may use additional displays (i.e., a plurality of displays) to accomplish the functionality of the display device 112 described herein.

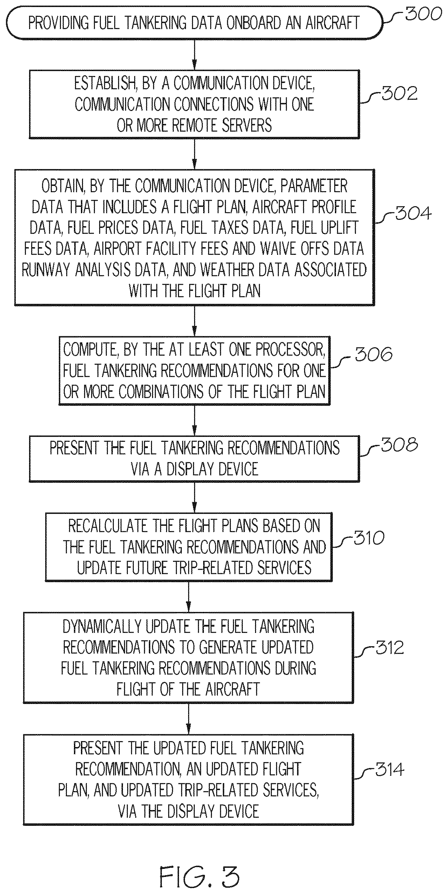

FIG. 3 is a flow chart that illustrates an embodiment of a process 300 for providing fuel tankering data onboard an aircraft. For ease of description and clarity, it is assumed that the process 300 begins by establishing, by a communication device, communication connections with one or more remote servers (step 302). Next, the process 300 obtains, by the communication device, parameter data that includes a flight plan, aircraft profile data, fuel prices data, fuel taxes data, fuel uplift fees data, airport facility fees and waive-offs data, runway analysis data, and weather data associated with the flight plan (step 304). Here, the process 300 creates a wireless communication connection to one or more disparately located servers for the purpose of retrieving data, and then process 400 obtains parameter data via the communication device. In certain embodiments, the process 300 establishes communication connections with, and obtains parameter data from, one or more avionics systems onboard the aircraft, in addition to the one or more remote servers.

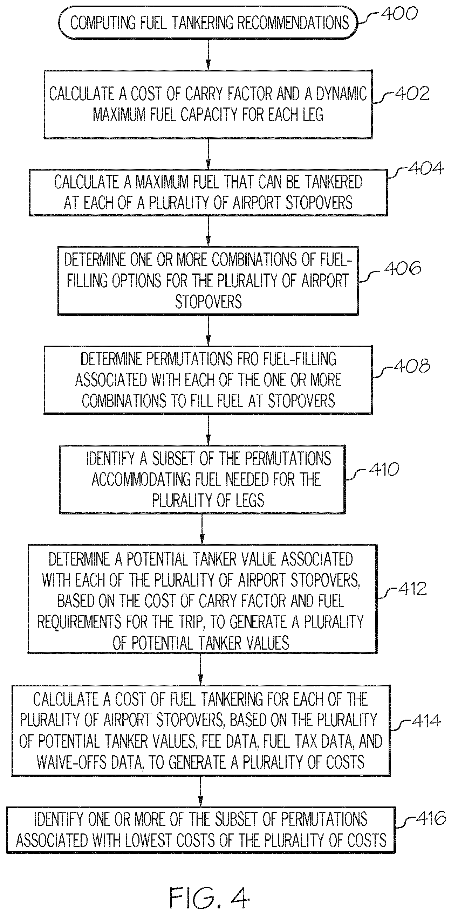

The process 300 then computes, by the at least one processor, fuel tankering recommendations for one or more combinations of the flight plan (step 306), and presents the fuel tankering recommendations via a display device (step 308). One suitable methodology for computing the fuel tankering recommendations is described below with reference to FIG. 4. Here, the process 300 identifies various fuel tankering options for each leg of the trip, a trip cost before fuel tankering, a trip cost after fuel tankering, and a monetary savings amount associated with fuel tankering. The process 300 identifies recommendations for fuel tankering options that are viable and which present a cost savings.

After computing the fuel tankering recommendations (step 306), the process 300 re-calculates the flight plan for the trip, based on the fuel tankering recommendations, and updates future trip-related services (step 310). In some embodiments, the process 300 may automatically re-calculate the flight plan for the trip, based on the fuel tankering recommendations. However, in other embodiments, the process 300 suggests optimal fuel filling options (i.e., provides fuel tankering recommendations) and if the user chooses to go with one of the presented options, the user can recalculate the flight plan. When the flight plan is re-calculated, any impact of fuel tankering on the following flight plan parameters will be accurately known: time of flight, the total fuel needed for the leg considering the tankering, and parameters associated with the navigation log of flight plan (e.g., at each waypoint in the flight route, the amount of fuel remaining and the amount of fuel consumed, the time of arrival, the time remaining).

In certain embodiments, at any point during the trip, the process 300 dynamically updates the fuel tankering recommendations to generate updated fuel tankering recommendations during flight of the aircraft (step 312). The process 300 then presents the updated fuel tankering recommendations, an updated flight plan, and updated trip-related services (step 314). In certain embodiments, the process 300 receives a user input request to re-calculate fuel tankering recommendations, during a flight. In this scenario, the user may re-calculate the fuel tankering recommendations based on a change to the current flight plan or a change to other data critical to the flight plan (e.g., weather data). In other embodiments, however, the process 300 re-calculates the fuel tankering recommendations according to a time-driven or event-driven schedule, throughout the flight. For example, the process 300 may re-calculate fuel tankering recommendations every half hour, every hour, every two hours, etc. As another example, the process 300 may re-calculate fuel tankering recommendations following completion of each leg of the flight plan. Once the fuel tankering recommendations are re-calculated (step 312), the process 300 then presents the updated fuel tankering recommendations via the display device (step 314).

FIG. 4 is a flow chart that illustrates an embodiment of a process 400 for computing fuel tankering recommendations. It should be appreciated that the process 400 described in FIG. 4 represents one embodiment of step 306 described above in the discussion of FIG. 3, including additional detail. First, the process 400 calculates a cost of carry factor and a dynamic maximum fuel capacity for each leg of a trip (step 402). The cost of carry factor and the dynamic maximum fuel capacity are elements associated with fuel tankering onboard an aircraft. The cost of carry factor comprises a percentage of fuel burnt to carry extra fuel for an hour of flight under particular weather conditions, flight conditions, and temperature conditions, and the dynamic maximum fuel capacity comprises a maximum amount of fuel an aircraft can carry for one leg of a trip under particular weather conditions, flight conditions, and temperature conditions.

In exemplary embodiments, the cost of carry factor is calculated using the following algorithm: The process 400 reads a maximum fuel capacity of the aircraft from the profile of the aircraft. The process 400 then calculates the minimum fuel required for the leg with input fuel to flight planning engine as zero. This minimum fuel required for the leg is TotalFuel and the time needed to complete the flight with this fuel is FlightHours. The process 400 then considers five intervals between minimum required fuel and maximum fuel capacity of the aircraft. The input fuel at each interval is InputFuelX, the interval value is IntervalFuel, the output fuel is TotalFuelX, and the maximum aircraft fuel is MaxFuel. Save InputFuelX and TotalFuelX in InputFuels and OutputFuels array. Therefore, InputFuelX = (X-1)*Total Fuel + Interval Fuel. For all intervals, the process 400 calculates cost of carry factor CoCFactor (as described below), and saves the cost of carry factor in variable CoCFactors:

$$FuelRatio\ at\ iteration\ X = (TotalFuelX - TotalFuel)/(InputFuelX - TotalFuel);$$

$$CostRatio = FuelRatio\ /\ FlightHours;$$

and

$$CoCFactor = CostRatio*100;$$

The process 400 generates a linear regression model using InputFuels, OutputFuels, and CoCFactors. This model provides CoCEquation in the form y=mx+c. Using the aforementioned computations, the process 400 returns values for InputFuels, OutputFuels, CoCFactors, and CoCEquation.

Although the preceding algorithm presents one exemplary method for calculating a cost of carry factor, the cost of carry factor may be calculated using any other method, including calculation methods and processes that are well-known and commonly accepted in the art. The cost of carry factor may be calculated by any formula or algorithm using flight plan data, aircraft profile data, aircraft performance data, weather data related to an aircraft and flight leg. The algorithm performs one or more flight plan iterations to compute cost of carry factor of a leg. Here, the process 400 computes the cost of carry factor for each leg of the trip, which is used later in the process 400 to calculate fuel tankering recommendations.

In exemplary embodiments, the dynamic maximum fuel capacity is calculated using an algorithm which performs one or more flight plan iterations to compute the dynamic maximum fuel capacity for a leg. The dynamic maximum fuel capacity of a leg is obtained using flight plan data, aircraft profile data, aircraft performance data and weather data related to an aircraft and flight leg. The parameter for dynamic maximum fuel capacity is well-known in the art, and conventional methods for calculating the dynamic maximum fuel capacity may be used, which need not be explained here. Here, the process 400 computes the dynamic maximum fuel capacity for each leg of the trip, which is used later in the process 400 to calculate fuel tankering recommendations.

The process 400 also calculates a maximum fuel that can be tankered at each of the plurality of airport stopovers (step 404). Here, the process 400 determines a plurality of capacity values associated with the aircraft under particular weather conditions, flight conditions, temperature conditions, and the flight plan. The capacity values may include, without limitation: the dynamic maximum fuel capacity, a maximum fuel capacity, a maximum takeoff weight, a maximum landing weight, and a basic operating weight. The process 400 then identifies a minimum value of the plurality of capacity values, wherein the maximum value that can be tankered at a particular leg is the minimum value.

The process 400 then determines one or more combinations of fuel-filling options for the plurality of airport stopovers (step 406). The combinations of the trip include each of the stopover airports and potential amounts of fuel that may be acquired at each of the stopover airports, based on fuel price ranges. Here, the process 400 determines combinations of fuel ranges by considering one fuel range from each airport stopover in the path from starting airport to departure airport of current leg, and filters out the combinations that do not fulfill criteria of fuel needed for the current leg.

The process 400 determines permutations for fuel-filling associated with the one or more combinations to fill fuel at airport stopovers (step 408). Each of the combinations is associated with one or more of the permutations. Each permutation is an arrangement of an amount of fuel to fill at each of the plurality of airport stopovers a combination, based on the fuel price ranges.

The process 400 then identifies a subset of the permutations accommodating fuel needed for the plurality of legs of the trip (step 410). Here, the process 400 tankers as much fuel as possible, considering the cost of carry factor, fuel available at each airport stopover, fuel remaining onboard the aircraft from a previous leg, flight plan data, and aircraft profile data. The process 400 filters out (i.e., removes) combinations and/or permutations that do not satisfy criteria including fuel needed for all of the legs of the trip and amount of fuel that falls within aircraft limits. Using an iterative methodology, the process 400 tankers the leftover, remaining fuel at the next cheapest airport, and so on. The process 400 then saves the cost of carry fuel, the fuel tankered, and fuel reused from the previous leg for this permutation, for future use in the algorithm.

The process 400 then determines a potential tanker value associated with each of the plurality of airport stopovers, based on the cost of carry factor, fuel requirements for the trip, and the maximum fuel that can be tankered at each stopover, to generate a plurality of tanker values (step 412).

Next, the process 400 calculates a cost of fuel tankering for each of the plurality of airport stopovers, based on the plurality of potential tanker values, fee data, fuel tax data, and waive-offs data, to generate a plurality of costs (step 414). Cost data may include, without limitation: airport fuel prices, fee data (e.g., fuel uplift fees, airport facility fees), fuel tax data, and waive-offs data. Such cost data applicable to a particular flight plan may be obtained from a remote server system, or as user input selections and/or data entry.

The cost of fuel tankering for each of the plurality of airport stopovers is determined by calculating a trip cost before tankering, a trip cost after tankering, and a savings amount. In exemplary embodiments, the cost of fuel tankering may be calculated using the following defined variables and algorithm:

The trip cost before tankering is defined as TripCostBeforeTankering and is initialized to zero. The trip cost after tankering is defined as TripCostAfterTankering and is initialized to zero. The monetary amount saved by using particular fuel tankering options is defined as Savings and is initialized to zero.

For each leg in the trip: (1) the TotalFuel is the total fuel needed for a particular leg; (2) the FuelFromPrevLeg is the fuel remaining at the destination of the previous leg in the sequence of legs of the trip; (3) the Price is the fuel price for the given TotalFuel at a departure airport (e.g., the initial departure airport and/or an airport stopover of the trip); (4) the FuelTax is the tax cost for filling fuel at this particular airport stopover; (5) the MinFuel is the minimum fuel to fill at the airport stopover in order to get a facility waive-off, which is also WaiveOffAmt; (6) the FuelUpliftFees is the fees to be paid for uplifting TotalFuel at the airport stopover; (7) TripCostAfterTankering = TripCostAfterTankering + FuelUplift*Price + FuelTax + FuelUpliftFees; and (8) If FuelUplift < MinFuel, then TripCostAfterTankering = TripCostAfterTankering + WaiveOffAmt.

$$\text{Savings\_1} = \text{TripCostBeforeTankering} - \text{TripCostAfterTankering};$$

$$\text{Penalty} = \text{Carbon Emissions Penalty} + \text{Aircraft Wear and Tear Penalty};$$

$$\text{Savings} = \text{Savings\_1} - \text{Penalty}.$$

After initializing the aforementioned variables and performing the aforementioned calculations, the algorithm returns values for TripCostBeforeTankering, TripCostAfterTankering, and Savings. The cost of fuel tankering for each of the plurality of airport stopovers is the TripCostAfterTankering.

The process 400 then identifies one or more of the subset of permutations associated with the lowest costs of the plurality of costs, wherein the fuel tankering recommendations comprise the one or more of the subset of permutations (step 416). In certain embodiments, the process 400 identifies one lowest-cost option for fuel tankering by determining which of the subset of permutations is associated with the lowest monetary cost. In some embodiments, however, the process 400 identifies a particular number of lowest-cost options for fuel tankering by recognizing that particular number of the subset of permutations associated with the lowest monetary cost. Since the subset of permutations meet criteria associated with the fuel needed for the plurality of legs of the trip, a maximum fuel that can be tankered at each airport stopover, a cost of carry factor, and a dynamic maximum fuel capacity for each leg, the fuel tankering recommendations thus accommodate these criteria and provide realistic fuel tankering options for cost-saving during the trip.

The various tasks performed in connection with processes 300-400 may be performed by software, hardware, firmware, or any combination thereof. For illustrative purposes, the preceding descriptions of processes 300-400 may refer to elements mentioned above in connection with FIGS. 1-2. In practice, portions of processes 300-400 may be performed by different elements of the described system. It should be appreciated that processes 300-400 may include any number of additional or alternative tasks, the tasks shown in FIGS. 3-4 need not be performed in the illustrated order, and processes 300-400 may be incorporated into a more comprehensive procedure or process having additional functionality not described in detail herein. Moreover, one or more of the tasks shown in FIGS. 3-4 could be omitted from embodiments of the processes 300-400 as long as the intended overall functionality remains intact.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematic shown in each of FIGS. 1-2 depicts one exemplary arrangement of elements, additional intervening elements, devices, features, or components may be present in an embodiment of the depicted subject matter.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

**Claims**

1. A method for providing fuel tankering data onboard an aircraft, the method comprising:

   obtaining a flight plan for a trip associated with the aircraft;
   determining one or more combinations of fuel-filling options for the trip, by at least one processor onboard the aircraft;
   computing, by the at least one processor, fuel tankering recommendations for each of the one or more combinations; and
   presenting the fuel tankering recommendations via a display device onboard the aircraft.

**2.** The method of Claim 1, further comprising:

establishing, by a communication device communicatively coupled to the at least one processor, communication connections with one or more remote servers; and

obtaining, by the at least one processor via the communication connections, parameter data comprising the flight plan, aircraft profile data, fuel prices data, fuel taxes data, fuel uplift fees data, airport facility fees and waive offs data, runway analysis data, and weather data associated with the flight plan;

wherein the fuel tankering recommendations are computed based on the parameter data.

**3.** The method of Claim 1, further comprising:

re-calculating the flight plan based on the fuel tankering recommendations, to generate an updated flight plan;

updating trip-related services associated with the updated flight plan, based on the fuel tankering recommendations, to generate updated trip-related services; and

presenting the updated flight plan and the updated trip-related services, via a display device communicatively coupled to the at least one processor.

**4.** The method of Claim 1, wherein the trip associated with the flight plan comprises a plurality of airport stopovers for fuel tankering and a plurality of legs, each of the plurality of legs comprising a subset of the trip from a first stopover to a second stopover; and

wherein computing the fuel tankering recommendations further comprises:

calculating a cost of carry factor and a dynamic maximum fuel capacity for each of the plurality of legs, wherein the cost of carry factor comprises a percentage of fuel burnt to carry extra fuel for an hour of flight under particular weather conditions, flight conditions, and temperature conditions, and wherein the dynamic maximum fuel capacity comprises maximum amount of fuel an aircraft can carry for one of the plurality of legs under the particular weather conditions, flight conditions, and temperature conditions;

calculating the fuel tankering recommendations, using the cost of carry factor and the dynamic maximum fuel capacity.

**5.** The method of Claim 4, further comprising:

calculating a maximum fuel value that can be tankered at each of the plurality of airport stopovers;

determining the one or more combinations of fuel-filling options for the plurality of airport stopovers, wherein the combinations of the trip include each of the stopover airports and potential amounts of fuel that may be acquired at each of the stopover airports, based on fuel price ranges;

determining permutations for fuel-filling associated with each of the one or more combinations, wherein each of the combinations is associated with one or more of the permutations, and wherein each permutation is an arrangement of an amount of fuel to fill at each of the plurality of airport stopovers of one of the one or more combinations, based on the fuel price ranges;

identifying a subset of the permutations accommodating fuel needed for the plurality of legs;

determining a potential tanker value associated with each of the plurality of airport stopovers, based on the cost of carry factor, fuel requirements for the trip, and the maximum fuel value that can be tankered at each of the plurality of airport stopovers, to generate a plurality of potential tanker values;

calculating a cost of fuel tankering for each of the plurality of airport stopovers, based on the plurality of potential tanker values, fee data, fuel tax data, and waive-offs data, to generate a plurality of costs; and

identifying one or more of the subset of permutations associated with lowest costs of the plurality of costs, wherein the fuel tankering recommendations comprise the one or more of the subset of permutations.

**6.** The method of Claim 5, wherein calculating the maximum fuel that can be tankered at each of the plurality of stopovers further comprises:

determining a plurality of capacity values associated with the aircraft, under particular weather conditions, flight conditions, temperature conditions, and the flight plan, wherein the plurality of capacity values comprises the dynamic maximum fuel capacity, a maximum fuel capacity, a maximum takeoff weight, a maximum landing weight, and a basic operating weight; and

identifying a minimum value of the plurality of capacity values, wherein the maximum fuel that can be tankered comprises the minimum value.

7. The method of Claim 1, further comprising:

dynamically updating the fuel tankering recommendations to generate updated fuel tankering recommendations during flight of the aircraft; and
presenting the updated fuel tankering recommendations via the display device.

8. The method of Claim 1, wherein the flight plan comprises a plurality of legs; wherein the method further comprises receiving a user input selection of a subset of the plurality of legs of the flight plan, via a user interface communicatively coupled to the at least one processor; and
wherein the fuel tankering recommendations are computed for the subset.

9. A system for providing fuel tankering data onboard an aircraft, the system comprising:

a system memory element;
a display device, configured to present fuel tankering recommendations; and
at least one processor, communicatively coupled to the system memory element, and the display device, the at least one processor configured to:

obtain a flight plan for a trip associated with the aircraft;
determine one or more combinations of fuel-filling options for the trip;
compute fuel tankering recommendations for each of the one or more combinations; and
present the fuel tankering recommendations via the display device onboard the aircraft.

10. The system of Claim 9, further comprising a communication device configured to establish communication connections with one or more remote servers, wherein the communication device is communicatively coupled to the at least one processor;
wherein the at least one processor is further configured to:

obtain, via the communication connections, parameter data comprising the flight plan, aircraft profile data, fuel prices data, fuel taxes data, fuel uplift fees data, airport facility fees and waive offs data, runway analysis data, and weather data associated with the flight plan; and
compute the fuel tankering recommendations based on the parameter data.

11. The system of Claim 9, wherein the at least one processor is further configured to:

re-calculate the flight plan based on the fuel tankering recommendations, to generate an updated flight plan;
update trip-related services associated with the updated flight plan, based on the fuel tankering recommendations, to generate updated trip-related services; and
present the updated flight plan and the updated trip-related services, via the display device.

12. The system of Claim 9, wherein the trip associated with the flight plan comprises a plurality of airport stopovers for fuel tankering and a plurality of legs, each of the plurality of legs comprising a subset of the trip from a first stopover to a second stopover; and
wherein the at least one processor is further configured to compute the fuel tankering recommendations by:

calculating a cost of carry factor and a dynamic maximum fuel capacity for each of the plurality of legs, wherein the cost of carry factor comprises a percentage of fuel burnt to carry extra fuel for an hour of flight under particular weather conditions, flight conditions, and temperature conditions, and wherein the dynamic maximum fuel capacity comprises maximum amount of fuel an aircraft can carry for one of the plurality of legs under the particular weather conditions, flight conditions, and temperature conditions;
calculating the fuel tankering recommendations, using the cost of carry factor and the dynamic maximum fuel capacity.

13. The system of Claim 12, wherein the at least one processor is further configured to:

calculate a maximum fuel value that can be tankered at each of the plurality of stopovers;
determine the one or more combinations of fuel-filling options for the plurality of airport stopovers, wherein the combinations of the trip include each of the stopover airports and potential amounts of fuel that may be acquired at each of the stopover airports, based on fuel price ranges;

determine permutations for fuel-filling associated with each of the combinations, wherein each of the combinations is associated with one or more of the permutations, and wherein each permutation is an arrangement of an amount of fuel to fill at each of the plurality of airport stopovers of one of the one or more combinations, based on the fuel price ranges;

identify a subset of the permutations accommodating fuel needed for the plurality of legs;

determine a potential tanker value associated with each of the plurality of airport stopovers, based on the cost of carry factor, fuel requirements for the trip, and the maximum fuel value that can be tankered at each of the plurality of airport stopovers, to generate a plurality of potential tanker values;

calculate a cost of fuel tankering for each of the plurality of airport stopovers, based on the plurality of potential tanker values, fee data, fuel tax data, and waive-offs data, to generate a plurality of costs; and

identify one or more of the subset of permutations associated with lowest costs of the plurality of costs, wherein the fuel tankering recommendations comprise the one or more of the subset of permutations.

14. The system of Claim 13, wherein the at least one processor is further configured to calculate the maximum fuel that can be tankered at each of the plurality of stopovers by:

determining a plurality of capacity values associated with the aircraft, under particular weather conditions, flight conditions, temperature conditions, and the flight plan, wherein the plurality of capacity values comprises the dynamic maximum fuel capacity, a maximum fuel capacity, a maximum takeoff weight, a maximum landing weight, and a basic operating weight; and

identifying a minimum value of the plurality of capacity values, wherein the maximum fuel that can be tankered comprises the minimum value.

15. The system of Claim 9, wherein the at least one processor is further configured to:

dynamically update the fuel tankering recommendations to generate updated fuel tankering recommendations during flight of the aircraft; and

present the updated fuel tankering recommendations via the display device.

FIG. 1

FIG. 2

PROVIDING FUEL TANKERING DATA ONBOARD AN AIRCRAFT — 300

↓

ESTABLISH, BY A COMMUNICATION DEVICE, COMMUNICATION CONNECTIONS WITH ONE OR MORE REMOTE SERVERS — 302

↓

OBTAIN, BY THE COMMUNICATION DEVICE, PARAMETER DATA THAT INCLUDES A FLIGHT PLAN, AIRCRAFT PROFILE DATA, FUEL PRICES DATA, FUEL TAXES DATA, FUEL UPLIFT FEES DATA, AIRPORT FACILITY FEES AND WAIVE OFFS DATA RUNWAY ANALYSIS DATA, AND WEATHER DATA ASSOCIATED WITH THE FLIGHT PLAN — 304

↓

COMPUTE, BY THE AT LEAST ONE PROCESSOR, FUEL TANKERING RECOMMENDATIONS FOR ONE OR MORE COMBINATIONS OF THE FLIGHT PLAN — 306

↓

PRESENT THE FUEL TANKERING RECOMMENDATIONS VIA A DISPLAY DEVICE — 308

↓

RECALCULATE THE FLIGHT PLANS BASED ON THE FUEL TANKERING RECOMMENDATIONS AND UPDATE FUTURE TRIP-RELATED SERVICES — 310

↓

DYNAMICALLY UPDATE THE FUEL TANKERING RECOMMENDATIONS TO GENERATE UPDATED FUEL TANKERING RECOMMENDATIONS DURING FLIGHT OF THE AIRCRAFT — 312

↓

PRESENT THE UPDATED FUEL TANKERING RECOMMENDATION, AN UPDATED FLIGHT PLAN, AND UPDATED TRIP-RELATED SERVICES, VIA THE DISPLAY DEVICE — 314

FIG. 3

FIG. 4

Europäisches
Patentamt

European
Patent Office

Office européen
des brevets

# EUROPEAN SEARCH REPORT

Application Number

EP 18 15 0106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/032941 A1 (ALLEN DAVID L [US]) 8 February 2007 (2007-02-08) * paragraphs [0003], [0012] - [0025]; figures 1-4 * | 1-15 | INV. G06Q10/04 |
| X | US 2013/197791 A1 (STRUZIK ANTHONY [US]) 1 August 2013 (2013-08-01) * paragraphs [0002], [0005] - [0022]; figure 1 * | 1-15 | |
| X | EP 1 595 789 A1 (TORE REIMERS [DE]) 16 November 2005 (2005-11-16) * paragraphs [0001], [0013], [0041] - [0045] * | 1-15 | |

TECHNICAL FIELDS
SEARCHED (IPC)

G06Q

The present search report has been drawn up for all claims

| Place of search | Date of completion of the search | Examiner |
|---|---|---|
| Munich | 12 April 2018 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 0106

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2018

| Patent document cited in search report | | Publication date | Patent family member(s) | | Publication date |
|---|---|---|---|---|---|
| US 2007032941 | A1 | 08-02-2007 | EP 1929245 A2 | | 11-06-2008 |
| | | | JP 5345845 B2 | | 20-11-2013 |
| | | | JP 2009502651 A | | 29-01-2009 |
| | | | US 2007032941 A1 | | 08-02-2007 |
| | | | WO 2007019133 A2 | | 15-02-2007 |
| US 2013197791 | A1 | 01-08-2013 | US 2013197791 A1 | | 01-08-2013 |
| | | | US 2013345956 A1 | | 26-12-2013 |
| | | | US 2014129281 A1 | | 08-05-2014 |
| EP 1595789 | A1 | 16-11-2005 | AT 430092 T | | 15-05-2009 |
| | | | EP 1595789 A1 | | 16-11-2005 |

EPO FORM P0459

For more details about this annex : see Official Journal of the European Patent Office, No. 12/82